# EUROPÄISCHE PATENTSCHRIFT

(11) **EP 3 803 138 B1**
(45) Veröffentlichungstag und Bekanntmachung des Hinweises auf die Patenterteilung: **06.07.2022**
(21) Anmeldenummer: 19728407.8
(22) Anmeldetag: 03.06.2019
(51) Int. Cl.: F16B 13/08, F16B 19/02, B21D 22/14, B21H 3/06, F16B 35/04, F16B 35/06

(54) **KONUSBOLZEN UND VERFAHREN ZUR HERSTELLUNG EINES KONUSBOLZENS**
CONICAL BOLT AND METHOD FOR PRODUCING A CONICAL BOLT
BOULON CONIQUE ET PROCÉDÉ DE PRODUCTION D'UN BOULON CONIQUE

(30) Priorität: 08.06.2018 DE 102018113669; 08.05.2019 DE 102019112009
(43) Veröffentlichungstag der Anmeldung: 14.04.2021
(73) Patentinhaber: fischerwerke GmbH & Co. KG, 72178 Waldachtal (DE)
(72) Erfinder: WÄLDER, Jonas, 71069 Sindelfingen (DE); HIRSCHLE, Tobias, 71131 Jettingen (DE); ESSIG, Simon, 72178 Waldachtal (DE); ROTHFUSS, Jens, 72178 Waldachtal (DE); SCHAIBLE, Siegfried, 72285 Pfalzgrafenweiler (DE); THEURER, Florian, 72227 Egenhausen (DE)
(86) Internationale Anmeldenummer: PCT/EP2019/064257
(87) Internationale Veröffentlichungsnummer: WO 2019/233910

(56) Entgegenhaltungen:
- WO-A1-2016/132964
- CN-U- 201 880 809
- DE-A1- 3 914 072
- DE-A1- 19 623 158
- DE-U1-202015 105 030
- US-A- 5 405 228
- US-A1- 2008 050 195
- US-A1- 2010 043 376

## Beschreibung

Die Erfindung betrifft einen Konusbolzen mit den Merkmalen des Oberbegriffs des Anspruchs 1 sowie ein Verfahren zur Herstellung eines Konusbolzens mit den Merkmalen des Oberbegriffs des Anspruchs 5.

Ein Bolzenanker zur Befestigung in einem Befestigungsgrund umfasst zumeist einen drehsymmetrischen Konusbolzen, welcher an einem Einbringende einen Konus aufweist. An den Konus angrenzend ist ein Halsbereich ausgebildet, der sich in Richtung eines Werkzeugendes des Konusbolzens erstreckt. An den Halsbereich wiederum schließt sich ein in Richtung des Werkzeugendes erstreckender Schaftbereich an, dessen Durchmesser größer als der Durchmesser des Halsbereichs ist. Durch die unterschiedlichen Durchmesser entsteht zwischen dem Halsbereich und dem Schaftbereich eine Schulter, die als Anschlag für ein Spreizelement dient. Die Schulter sorgt dafür, dass das Spreizelement, insbesondere während des Eintreibens des Bolzenankers in den Untergrund, nicht in Richtung des Werkzeugendes über die Schulter in den Schaftbereich gelangen kann. Auf dem Schaftbereich ist meist ein Gewinde angeordnet, welches sich vom Werkzeugende in Richtung der Schulter erstreckt. Das Gewinde dient zumeist der Aufnahme einer Sechskantmutter. Nachdem der Bolzenanker bestimmungsgemäß in den Untergrund eingetrieben ist, wird die Sechskantmutter mit einer Drehenergie beaufschlagt, was dazu führt, dass der Konusbolzen entgegen seiner Einbringrichtung aus dem Befestigungsgrund gezogen wird. Das im Wesentlichen bezüglich des Befestigungsgrunds ortsfest verbleibende Spreizelement wird hierbei auf den Konus gezogen, wodurch dieses aufspreizt und den Bolzenanker endfest im Befestigungsgrund verankert.

Derartige Konusbolzen werden durch Kaltfließpressen und Walzen gefertigt. Zur Herstellung des Konusbolzens werden aus einem Metalldraht zuerst Drahtstücke abgelängt, an welche dann der Konus und der Halsbereich angeformt werden. Anschließend wird der Konusbolzenrohling in eine Walzanlage transferiert, in welcher das Gewinde auf den Schaft gewalzt wird. Zum Transfer und zur Justage wird am Konusbolzenrohling an der Schulter meist ein umlaufender Bund angeprägt, der einen größeren Durchmesser als der Schaftdurchmesser aufweist. An diesem Bund hängend wird der Konusbolzenrohling in die Walzanlage transferiert und dort zentriert. Anschließend hat der Bund keine wesentliche Funktion mehr. Trotzdem verbleibt dieser meist am Konusbolzen, nachdem das Gewinde gewalzt ist. Das Dokument US 2008/050195 A1 zeigt einen Konusbolzen nach dem Stand der Technik.

Sollen Bolzenanker mit ausreichenden Haltewerten und dennoch mit möglichst geringem Kraftaufwand in ein vorgefertigtes Bohrloch eingebracht werden, muss der Bund zumeist entfernt werden, was einen separaten Arbeitsschritt, beziehungsweise ein zeitintensives Umrüsten der Maschine, unumgehbar macht.

Aufgabe der Erfindung ist es, einen alternativen Konusbolzen sowie ein alternatives Verfahren zur Herstellung eines Konusbolzens vorzuschlagen.

Diese Aufgabe wird erfindungsgemäß durch einen Konusbolzen mit den Merkmalen des Anspruchs 1 sowie durch ein Verfahren mit den Merkmalen des Anspruchs 5 gelöst. Eine Ausführungsform der Erfindung schlägt einen Konusbolzen eines Bolzenankers zur Verankerung in einem Befestigungsgrund vor. Der Konusbolzen umfasst einen Grundkörper, der im Wesentlichen bezüglich einer Symmetrieachse drehsymmetrisch ist. Die Symmetrieachse erstreckt sich hierbei zwischen einem Einbringende und einem Werkzeugende des Konusbolzens, wobei das Einbringende dem Werkzeugende gegenüberliegt. Am Einbringende ist ein Konus angeordnet, der sich, beginnend vom Einbringende in Richtung des Werkzeugendes hin, verjüngt. Ein insbesondere zylindrischer Halsbereich mit einem ersten Durchmesser erstreckt sich, insbesondere angrenzend an den Konus, weiter in Richtung des Werkzeugendes. Ein insbesondere zylindrischer Schaftbereich mit einem zweiten Durchmesser erstreckt sich vom Halsbereich bis zum Werkzeugende. Der zweite Durchmesser ist hierbei größer als der erste Durchmesser des Halsbereichs. Dort, wo der Halsbereich und der Schaftbereich aneinander angrenzen, ist ein Übergangsbereich ausgebildet, der im Wesentlichen die Gestalt einer umlaufenden und bezüglich der Symmetrieachse näherungsweise drehsymmetrischen Schulter hat.

Kennzeichnend für die Erfindung ist, dass der Übergangsbereich an einer in Richtung des Einbringendes weisenden Stirnseite eine bezüglich der Symmetrieachse zumindest näherungsweise drehsymmetrische und näherungsweise kreisrund umlaufende, insbesondere V-förmige, Einsenkung aufweist, die in Richtung des Werkzeugendes vertieft ist. Unter "V-förmig" ist nicht eine streng symmetrische Form zu verstehen. Zudem kann die Einsenkung auch näherungsweise halbkreisförmig, grabenartig oder rechteckig umlaufend ausgestaltet sein. Eine erfindungsgemäße Einsenkung kann auch dadurch realisiert sein, dass der Übergangsbereich als eine im Wesentlichen homogene, hohlkonische Fläche zwischen dem Halsbereich und dem Schaftbereich ausgestaltet ist, wobei die hohlkonische Fläche in Richtung des Einbringendes geneigt ist. Hierdurch kann die Einsenkung, radial bezüglich der Symmetrieachse gesehen, unmittelbar am Halsbereich angeordnet sein. Anders gesprochen grenzt hierbei zumindest ein Teil der Einsenkung unmittelbar an den ersten Durchmesser des Halsbereichs an.

In einer weiteren vorteilhaften Ausgestaltung der Erfindung weist die Stirnseite, zusätzlich oder alternativ zu der Einsenkung eine ebenfalls bezüglich der Symmetrieachse zumindest näherungsweise drehsymmetrische und näherungsweise kreisrund umlaufende Materialaufwerfung auf, die in Richtung des Einbringendes erhaben ist. Die Materialaufwerfung ist bezogen auf die Symmetrieachse in einem größeren radialen Abstand zur Symmetrieachse angeordnet, als die Einsenkung. Anders gesprochen ist die Materialaufwerfung näher an dem Schaftbereich als an dem Halsbereich angeordnet. Die Materialaufwerfung hat insbesondere die Gestalt eines näherungsweise kreisrund umlaufenden Wulstes, einer näherungsweise kreisrund umlaufenden und näherungsweise spitz zulaufenden V-, oder näherungsweise einer näherungsweise kreisrund umlaufenden Rechteckform. Sowohl die genannten Ausgestaltungen der Vertiefung als auch der Materialaufwerfung sind beispielhaft und nicht abschließend.

Vorteilhafterweise liegt eine Höhe, gemessen parallel zur Symmetrieachse, zwischen einem höchsten Punkt der Materialaufwerfung und einem tiefsten Punkt der Einsenkung in einem Bereich zwischen 0,1 mm und 2,0 mm. Bevorzugt liegt die Höhe in einem Bereich zwischen 0,1 mm und 1,0 mm. Besonders bevorzugt liegt die Höhe jedoch in einem Bereich zwischen 0,1 mm und 0,3 mm.

In einer weiteren vorteilhaften Ausgestaltung der Erfindung weist der Schaftbereich in der Nähe des Übergangsbereichs einen balligen Bereich und/oder einen sich verjüngenden Bereich auf. Unter "in der Nähe" soll verstanden werden, dass eine maximale radiale Ausdehnung, im Folgenden auch "Maximum" genannt, bezogen auf die Symmetrieachse des balligen Bereichs nicht weiter als 25,0 mm, gemessen vom Übergangsbereich in Richtung des Werkzeugendes, angeordnet ist. Insbesondere grenzt der sich verjüngende Bereich unmittelbar an den Übergangsbereich an, und vorzugsweise ist das Maximum des balligen Bereichs zwischen 5,0 mm und 10,0 mm von dem sich verjüngenden Bereich beabstandet. Unter "ballig" ist keine den Umfang des Konusbolzens konstant homogen umlaufende Wölbung zu verstehen. Vielmehr können fertigungsbedingt im balligen Bereich in Umfangsrichtung mehrere unterschiedlich hohe Maxima angeordnet sein. Zudem sind die Maxima nicht zwangsläufig diskrete Höhen. Insbesondere sind die Maxima des balligen Bereichs vielmehr Regionen mit einer zumindest teilweise konstanten Höhe in Längsrichtung der Symmetrieachse. Insbesondere erstreckt sich der ballige Bereich, insbesondere die Maxima des balligen Bereichs, in einem Bereich zwischen 5,0 mm und 15,0 mm entlang der Symmetrieachse. Der ballige Bereich ist gegenüber dem im Wesentlichen zylindrischen zweiten Durchmesser des Schaftbereichs insbesondere in einem Höhenbereich zwischen 0,02 mm und 0,3 mm erhaben, wohingegen der sich verjüngende Bereich gegenüber dem im Wesentlichen zylindrischen zweiten Durchmesser des Schaftbereichs insbesondere zwischen 0,02 mm und 0,3 mm vertieft ist. Der sich verjüngende Bereich ist näherungsweise konisch und gegenüber der Symmetrieachse näherungsweise drehsymmetrisch ausgestaltet. Der sich verjüngende Bereich verjüngt sich zudem vom Schaftbereich in Richtung des Halsbereichs. Eine spezielle Fertigungstechnik, beispielsweise bei welcher ein Walzwerkzeug eine Bombierung aufweist, kann dazu führen, dass der ballige Bereich näherungsweise konkav ausgebildet ist und der sich verjüngende Bereich in Richtung des Einbringendes ansteigt.

In einer Ausführungsform des erfindungsgemäßen Verfahrens zur Herstellung eines Konusbolzens wird ein Konusbolzen aus einem Konusbolzenrohling mittels eines Walzwerkzeugs gefertigt. Der Konusbolzenrohling weist, wie der daraus gefertigte Konusbolzen auch, einen im Wesentlichen bezüglich einer Symmetrieachse drehsymmetrischen Grundkörper mit einem Einbringende und einem dem Einbringende gegenüberliegenden Werkzeugenende auf. Insbesondere ist am Einbringende ein sich in Richtung des Werkzeugendes verjüngender Konus angeordnet. Der Konusbolzenrohling muss jedoch nicht zwangsläufig einen Konus aufweisen. Dieser kann in einem späteren Umformprozess nachträglich angeformt werden. Insbesondere schließt an den Konus des Konusbolzenrohling ein insbesondere zylindrischer Halsbereich mit einem ersten Durchmesser an. Die Längsausdehnung des Halsbereichs entlang der Symmetrieachse korrespondiert hierbei insbesondere mit der Längsausdehnung des Konus. Insbesondere schließt an den Halsbereich des Konusbolzenrohling ein sich in Richtung des Werkzeugendes erstreckender und sich bezüglich der Symmetrieachse radial erweiternder konischer Bereich an, dessen Längsausdehnung entlang der Symmetrieachse um ein Mehrfaches geringer ist als die Längsausdehnung des Halsbereichs. Weiter grenzt insbesondere an den konischen Bereich ein bezüglich der Symmetrieachse radial umlaufender Bund mit einem Bunddurchmesser an, der größer als der erste Durchmesser des Halsbereichs des Konusbolzenrohlings ist. Eine Längsausdehnung des Bunds entlang der Symmetrieachse korrespondiert hierbei vorteilhafterweise mit der Längsausdehnung des konischen Bereichs. Die Längsausdehnung des Bunds liegt insbesondere in einem Bereich zwischen 2,0 mm und 7,0 mm. Zwischen dem Halsbereich des Konusbolzenrohlings und dem Bund muss nicht zwangsläufig ein konischer Bereich angeordnet sein. Der insbesondere zylindrische Halsbereich kann auch direkt in einem näherungsweise rechten Winkel an den Bund angrenzen. Aus fertigungstechnischer Sicht ist jedoch ein konischer Bereich sinnvoll und daher zu bevorzugen. Weiter ist, insbesondere an den Bund anschließend, ein sich in Richtung des Werkzeugendes des Konusbolzenrohlings erstreckender Schaftbereich mit einem zweiten Durchmesser angeordnet, welcher größer als der erste Durchmesser des Halsbereichs des Konusbolzenrohlings, jedoch kleiner als der Bunddurchmesser des Bunds des Konusbolzenrohlings ist. An Übergängen zwischen dem konischen Bereich und dem Bund, beziehungsweise zwischen dem Bund und dem Schaftbereich kann es aus fertigungstechnischer Sicht sinnvoll sein, verschieden große Radien oder Fasen unterschiedlicher Neigungswinkel anzuordnen. Bezogen auf einen Außenumfang des insbesondere zylindrischen Schaftbereichs ist der Bund zwischen 0,5 mm und 1,5 mm erhaben.

Kennzeichnend für das erfindungsgemäße Verfahren ist, dass zur Herstellung des Konusbolzen aus dem Konusbolzenrohling, der Bund des Konusbolzenrohlings mit dem Walzwerkzeug durch einen durch Umformung hervorgerufenen Materialfluss entfernt wird. Somit wird durch Umformung ein Konusbolzen geschaffen, der keinen Bund mehr aufweist, welcher ein einfaches und kraftsparendes Eintreiben des Konusbolzen in den Befestigungsgrund ermöglicht. Unter "durch Umformung hervorgerufenen Materialfluss" ist zu verstehen, dass das Walzwerkzeug insbesondere eine Schräge aufweist, die in der Lage ist, den Bund in Richtung des Einbringendes und insbesondere in den konischen Bereich zu drängen. Durch die Verdrängung des Bunds insbesondere in den konischen Bereich entsteht ein Übergangsbereich zwischen dem Halsbereich und des Schaftbereichs des Konusbolzen. Der Bund des Konusbolzenrohlings dient dazu, den Konusbolzenrohling zu zentrieren und in eine Walzanlage zu transferieren. Ist der Konusbolzenrohling in der Walzanlage zentriert, ist der Bund für den weiteren Fertigungsprozess nicht mehr von Belang. Ein wesentlicher Vorteil des Verdrängens des Bunds ist, dass im gleichen Prozessschritt ein Gewinde auf den Schaftbereich des Konusbolzenrohlings gewalzt werden kann. Der Bund muss nicht in einem separaten Prozessschritt entfernt werden, was einen Werkstücktransfer und/oder einen Werkzeugwechsel und/oder einen Maschinenwechsel mit sich führen würde. Hierdurch kann die Wirtschaftlichkeit der Fertigung eines Konusbolzen ohne Bund deutlich gesteigert werden. Ein fehlender konischer Bereich zwischen dem Halsbereich des Konusbolzenrohlings und des Bunds des Konusbolzenrohlings begünstigt eine Faltenbildung, wenn der Bund in Richtung des Einbringendes des Konusbolzenrohlings gedrängt wird. Eine Faltenbildung wiederum begünstigt Korrosionsbildung und daher ist die Verwendung eines konischen Bereichs bevorzugt.

Vorteilhafterweise wird ein Volumen des Bunds, welches durch die Ausdehnung des Bunds in Längsrichtung parallel zur Symmetrieachse und durch die Höhe des Bunds bestimmt ist, sowohl durch radialen als auch axialen Materialfluss bezüglich der Symmetrieachse durch das Walzwerkzeug verdrängt. Dies wird insbesondere durch die Schräge des Walzwerkzeugs ermöglicht. Durch die Schräge wirkt beim Umformprozess eine Kraftkomponente in Richtung des Einbringendes des Konusbolzenrohlings, parallel zur Symmetrieachse und eine Kraftkomponente senkrecht zur Symmetrieachse. Eine Überlagerung beider Kraftkomponenten sorgt für einen radialen und axialen Materialfluss.

In einer weiteren erfindungsgemäßen Ausgestaltung des Verfahrens weist der Konusbolzen, der aus dem Walzprozess des Konusbolzenrohling resultiert, eine größere Gesamtlänge und einen kürzeren Halsbereich als der Konusbolzenrohling auf. Die größere Gesamtlänge resultiert insbesondere daraus, dass der Bund radial in den Grundkörper des Konusbolzenrohlings gepresst wird, wohingegen eine Verkürzung des Halsbereichs im Wesentlichen daraus resultiert, dass der Bund gleichzeitig axial in den Halsbereich gedrängt wird. Die Änderung der Gesamtlänge liegt in einem Bereich zwischen 0,3 mm und 1,5 mm und die Verkürzung des Halsbereichs beläuft sich auf eine Länge kleiner 0,4 mm.

In der praktischen Umsetzung zeichnet sich das erfindungsgemäße Verfahren dadurch aus, dass der Konusbolzenrohling in dem Walzwerkzeug um die Symmetrieachse rotiert wird und, während der Konusbolzenrohling das Walzwerkzeug durchläuft, die Schräge des Walzwerkzeugs den Bund axial und radial insbesondere in den konischen Bereich oder den Halsbereich des Konusbolzenrohling drängt. Dadurch entsteht unter anderem zumeist die für den erfindungsgemäßen Konusbolzen kennzeichnende, insbesondere kreisrund umlaufende, Materialaufwerfung.

Vorteilhafterweise, bevor der Konusbolzenrohling den eigentlichen Walzprozess durchläuft, wird der Konusbolzenrohling durch ein axiales Stauchen aus einem im Wesentlichen zylindrischen Ausgangsteil, beispielsweise einem Draht, gefertigt.

Das erfindungsgemäße Verfahren ist prinzipiell auf alle gattungsgemäßen Konusbolzenrohlinge verschiedenster Durchmesser und Längen anwendbar, die einen Bund aufweisen. Hierfür sind lediglich die Dimensionierung der Werkzeuge sowie die Fertigungsprozessparameter an den jeweiligen Konusbolzenrohling anzupassen.

Die Erfindung wird nachfolgend anhand eines Ausführungsbeispiels näher erläutert. Es zeigen:
- Figur 1: einen rotationssymmetrischen Konusbolzen in einer Schnittdarstellung entlang einer Symmetrieachse,
- Figur 2: einen rotationssymmetrischen Konusbolzenrohling in einer Schnittdarstellung entlang einer Symmetrieachse, und
- Figur 3: eine schematische Darstellung eines Walzwerkzeugs.

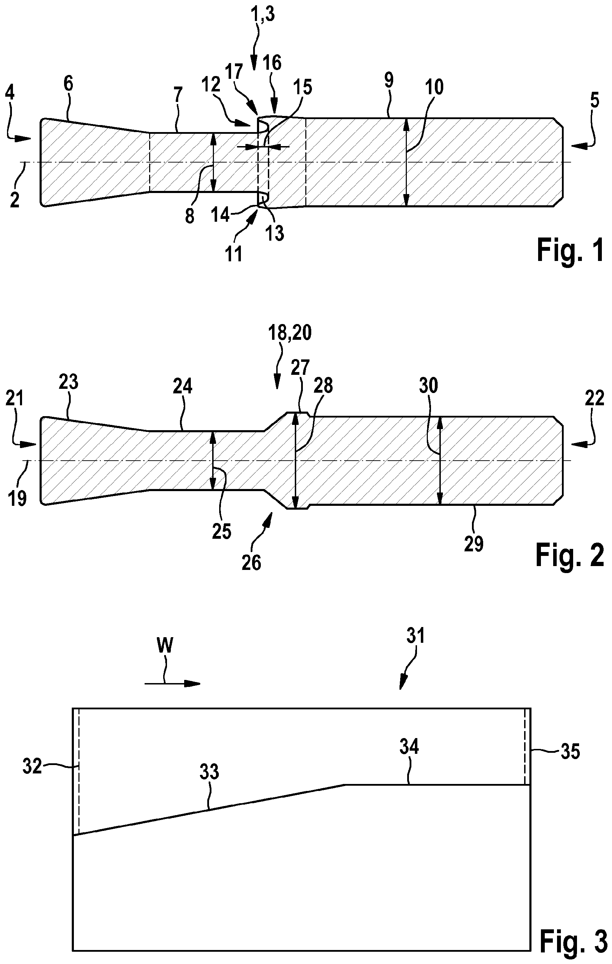

In Figur 1 ist ein rotationssymmetrischer Konusbolzen 1 mit einem Grundkörper 3 in einer Schnittdarstellung entlang einer Symmetrieachse 2 dargestellt. Der in Figur 1 hintere Teil des Konusbolzens 1 umfasst ein Werkzeugende 5 an welchem zumeist eine Schlagfläche oder eine Werkzeugaufnahme (beides nicht dargestellt) angeordnet ist. Der Konusbolzen 1 weist an einem vorderen Teil ein Einbringende 4 auf, welches in ein vorgefertigtes Bohrloch in einem Befestigungsgrund (nicht dargestellt) einzubringen ist. Am Einbringende 4 ist ein Konus 6 angeordnet. Der Konus 6 erstreckt sich verjüngend entlang der Symmetrieachse 2 in Richtung des Werkzeugendes 5 und geht in einen zylindrischen Halsbereich 7 über, der einen ersten Durchmesser 8 aufweist. Der Konus 6 ist im Wesentlichen gleich lang wie der Halsbereich 7. Beginnend vom Werkzeugende 5 erstreckt sich ein zylindrischer Schaftbereich 9 in Richtung des Einbringendes 4 des Konusbolzens 1. Der Schaftbereich 9 weist einen zweiten Durchmesser 10 auf. Der zweite Durchmesser 10 des Schaftbereichs 9 ist hierbei größer als der erste Durchmesser 8 des Halsbereichs 7 des Konusbolzens 1.

Zwischen dem Halsbereich 7 des Konusbolzens 1 und dem Schaftbereich 9 des Konusbolzens 1 ist ein Übergangsbereich 11 angeordnet. Unter "Übergangsbereich" ist ein Bereich zu verstehen, in welchem der Halsbereich 7 mit dem ersten Durchmesser 8 in den Schaftbereich 9 mit dem zweiten Durchmesser 10 übergeht. Der Übergangsbereich 11 ist hierbei bezüglich der Symmetrieachse 2 im Wesentlichen als eine drehsymmetrische Schulter ausgestaltet. Der Übergangsbereich 11 weist eine in Richtung des Einbringendes 4 weisende Stirnseite 12 auf. Die Stirnseite 12 weist eine bezüglich der Symmetrieachse 2 kreisrund umlaufende, U-förmige Einsenkung 13 auf, die in Richtung des Werkzeugendes 5 vertieft ist. Zudem weist die Stirnseite 12 eine ebenfalls bezüglich der Symmetrieachse 2 kreisrund umlaufende Materialaufwerfung 14 auf, die in Richtung des Einbringendes 4 erhaben ist. Die Materialaufwerfung 14 grenzt radial bezogen auf die Symmetrieachse 2 unmittelbar an die Einsenkung 13 an, wobei die Materialaufwerfung 14 in einem größeren radialen Abstand zur Symmetrieachse 2 angeordnet ist, als die Einsenkung 13. Eine Höhe 15 zwischen der Einsenkung 13 und der Materialaufwerfung 14, sowie die Einsenkung 13 als auch die Materialaufwerfung 14 selbst sind in der Figur 1 vergrößert und nicht maßgetreu dargestellt um den Übergangsbereich 11 besser visualisieren zu können. An den Übergangsbereich 11 angrenzend weist der Schaftbereich 9 des Konusbolzens 1 einen leicht balligen Bereich 16 auf, der bezüglich der Symmetrieachse 2 drehsymmetrisch ist. Bezüglich des Durchmessers 10 des zylindrischen Schaftbereichs 9 ist der ballige Bereich 16, radial bezogen auf die Symmetrieachse 2, leicht erhaben. Der ballige Bereich 16 geht in Richtung des Einbringendes 4 in einen kurzen im Wesentlichen konisch verlaufenden und sich verjüngenden Bereich 17 über, welcher ebenfalls bezogen auf die Symmetrieachse 2 drehsymmetrisch ausgestaltet ist. Der sich verjüngende Bereich 17 verjüngt sich in Richtung des Einbringendes 4 und ist in Richtung der Symmetrieachse 2 geneigt.

Der in Figur 1 dargestellte Konusbolzen 1 kann aus einem Konusbolzenrohling 18, dargestellt in Figur 2, in Verbindung mit einem schematisch dargestellten Walzwerkzeug 31, dargestellt in Figur 3, hergestellt werden. Der Konusbolzenrohling 18 umfasst einen Grundkörper 20 und ist bezüglich einer Symmetrieachse 19 drehsymmetrisch ausgestaltet. Der Konusbolzenrohling 18 weist ein Einbringende 21 und ein dem Einbringende 21 gegenüberliegendes Werkzeugende 22 auf. Am Einbringende 21 ist ein Konus 23 angeordnet, der sich in Richtung des Werkzeugendes 22 erstreckt und verjüngt. Der Konus 23 geht in Richtung des Werkzeugendes 22 in einen zylindrischen Halsbereich 24 über, der durch einen ersten Durchmesser 25 definiert ist. Die Ausdehnung des Konus 23 entlang der Symmetrieachse 19 korrespondiert im Wesentlichen mit der Ausdehnung des Halsbereichs 24 entlang der Symmetrieachse 19. An den zylindrischen Halsbereich 24 angrenzend erstreckt sich zudem in Richtung des Werkzeugendes 22 ein, bezogen auf den Konus 23 und den Halsbereich 24 kurzer, konischer Bereich 26, der sich in Richtung des Werkzeugendes 22 erweitert und eine Drehsymmetrie bezüglich der Symmetrieachse 19 aufweist. An den konischen Bereich 26 angrenzend erstreckt sich in Richtung des Werkzeugendes 22 einen Bund 27, der bezogen auf die Symmetrieachse 19 drehsymmetrisch und durch einen Bunddurchmesser 28 definiert ist. Die Ausdehnung des Bunds 27 entlang der Symmetrieachse 19 korrespondiert hierbei in etwa mit der Ausdehnung des konischen Bereichs 26 entlang der Symmetrieachse 19. An den Bund 27 angrenzend erstreckt sich ein zylindrischer Schaftbereich 29 mit einem zweiten Durchmesser 30 bis zum Werkzeugende 22. Der zweite Durchmesser 30 des Schaftbereichs 29 ist größer als der erste Durchmesser 25 des Halsbereichs 24, jedoch kleiner als der Bunddurchmesser 28 des Bunds 27.

Zur Herstellung eines Konusbolzens 1 aus einem Konusbolzenrohling 18 wird der Konusbolzenrohling 18 um die Symmetrieachse 19 rotierend in das Walzwerkzeug 31 eingebracht. Eine Einführschräge 32 sorgt hierbei dafür, dass der Konusbolzenrohling 18 beschädigungsfrei in das Walzwerkzeug 31 eingebracht werden kann. Der Konusbolzenrohling 18 wird in Walzrichtung W durch das Walzwerkzeug 31 in Richtung einer Auslaufkante 35 geführt. Die Symmetrieachse 19 und die Walzrichtung W sind während des kompletten Walzprozesses im Wesentlichen in einem rechten Winkel zueinander ausgerichtet. Das Walzwerkzeug 31 weist einen Bundwalzbereich 33 auf, der im Wesentlichen eine Schräge darstellt, die beginnend von der Einführschräge 32 in Richtung der Auslaufkante 35 ansteigt. Durch den Bundwalzbereich 33 wird der Bund 27 des Konusbolzenrohlings 18 durch axialen und radialen Materialfluss in den konischen Bereich 26 gepresst, wodurch letztendlich die Materialaufwerfung 14, die Einsenkung 13, der ballige Bereich 16 sowie der sich verjüngende Bereich 17 am Konusbolzen 1 entstehen. An den Bundwalzbereich 33 schließt sich ein, in der Umformtechnik typischer, Kalibrierbereich 34 an. Nachdem der Konusbolzenrohling 18 diesen durchlaufen hat, tritt der fertige Konusbolzen 1 durch die Auslaufkante 35 heraus. Vorteilhafterweise (jedoch hier nicht gezeigt) wird im gleichen Prozessschritt, in dem der Bund 27 des Konusbolzenrohlings 18 im Walzwerkzeug 31 umgeformt wird, ein Gewinde auf den Schaftbereich 29 des Konusbolzenrohlings 18 gerollt.

### Bezuqszeichenliste

### Konusbolzen und Verfahren zur Herstellung eines Konusbolzens

- 1: Konusbolzen
- 2: Symmetrieachse des Konusbolzens 1
- 3: Grundkörper des Konusbolzens 1
- 4: Einbringende des Konusbolzens 1
- 5: Werkzeugende des Konusbolzens 1
- 6: Konus des Konusbolzens 1
- 7: Halsbereich des Konusbolzen 1
- 8: Erster Durchmesser des Halsbereichs 7 des Konusbolzens 1
- 9: Schaftbereich des Konusbolzens 1
- 10: Zweiter Durchmesser des Schaftbereichs 9 des Konusbolzen 1
- 11: Übergangsbereich
- 12: Stirnseite des Übergangsbereichs 11
- 13: Einsenkung
- 14: Materialaufwerfung
- 15: Höhe zwischen Einsenkung 13 und Materialaufwerfung 14
- 16: Balliger Bereich
- 17: Verjüngender Bereich
- 18: Konusbolzenrohling
- 19: Symmetrieachse des Konusbolzenrohlings 18
- 20: Grundkörper des Konusbolzenrohlings 18
- 21: Einbringende des Konusbolzenrohlings 18
- 22: Werkzeugende des Konusbolzenrohlings 18
- 23: Konus des Konusbolzenrohlings 18
- 24: Halsbereich des Konusbolzenrohlings 18
- 25: Erster Durchmesser des Halsbereichs 24 des Konusbolzenrohlings 18
- 26: Konischer Bereich
- 27: Bund
- 28: Bunddurchmesser
- 29: Schaftbereich des Konusbolzenrohlings 18
- 30: Zweiter Durchmesser des Schaftbereichs 29 des Konusbolzenrohlings 18
- 31: Walzwerkzeug
- 32: Einführschräge
- 33: Bundwalzbereich
- 34: Kalibrierbereich
- 35: Auslaufkante
- W: Walzrichtung

## Patentansprüche

1. Konusbolzen (1) eines Bolzenankers zur Verankerung in einem Befestigungsgrund, wobei der Konusbolzen
- einen sich entlang einer Symmetrieachse (2) erstreckenden, im Wesentlichen bezüglich der Symmetrieachse (2) drehsymmetrischen, Grundkörper (3) mit einem Einbringende (4), einem dem Einbringende (4) gegenüberliegenden Werkzeugende (5)
- einen Konus (6) am Einbringende (4),
- einen sich vom Konus (6) in Richtung des Werkzeugendes (5) erstreckenden Halsbereich (7) mit einem ersten Durchmesser (8),
- einen sich vom Halsbereich (7) zum Werkzeugende (5) erstreckenden Schaftbereich (9) mit einem zweiten Durchmesser (10), welcher größer als der erste Durchmesser (8) ist, sowie
- einen Übergangsbereich (11) zwischen dem Halsbereich (7) und dem Schaftbereich (9), umfasst,
**dadurch gekennzeichnet, dass** der Übergangsbereich (11) an einer in Richtung des Einbringendes (4) weisenden Stirnseite (12) eine bezüglich der Symmetrieachse (2) drehsymmetrische und näherungsweise kreisrund umlaufende, insbesondere V-förmige, Einsenkung (13) aufweist, die in Richtung des Werkzeugendes (5) vertieft ist.

2. Konusbolzen (1) nach Anspruch 1, **dadurch gekennzeichnet, dass** der Übergangsbereich (11) an der Stirnseite (12) eine bezüglich der Symmetrieachse (2) drehsymmetrische und näherungsweise kreisrund umlaufende Materialaufwerfung (14) aufweist, die in Richtung des Einbringendes (4) erhaben ist und in einem größeren radialen Abstand zur Symmetrieachse (2) angeordnet ist als die Einsenkung (13).

3. Konusbolzen (1) nach Anspruch 2, **dadurch gekennzeichnet, dass** eine Höhe (15), gemessen parallel zur Symmetrieachse (2), zwischen einem höchsten Punkt der Materialaufwerfung (14) und einem tiefsten Punkt der Einsenkung (13), in einem Bereich zwischen [0,1 - 2] mm liegt.

4. Konusbolzen (1) nach einem der Ansprüche 1 bis 3, **dadurch gekennzeichnet, dass** der Schaftbereich (9) in der Nähe des Übergangsbereichs (11) einen balligen Bereich (16) und/oder einen sich verjüngenden Bereich (17) aufweist.

5. Verfahren zur Herstellung eines Konusbolzens (1), insbesondere nach einem der Ansprüche 1 bis 4, aus einem Konusbolzenrohling (18) mittels eines Walzwerkzeugs (31), wobei der Konusbolzenrohling (18)
- einen sich entlang einer Symmetrieachse (19) erstreckenden, im Wesentlichen bezüglich der Symmetrieachse (19) drehsymmetrischen, Grundkörper (20) mit einem Einbringende (21), einem dem Einbringende (21) gegenüberliegenden Werkzeugende (22),
- insbesondere einen am Einbringende (21) angeordneten Konus (23),
- einen, insbesondere an den Konus (23) angrenzenden, sich in Richtung des Werkzeugendes (22) erstreckenden Halsbereich (24) mit einem ersten Durchmesser (25),
- insbesondere einen an den Halsbereich (24) angrenzenden konischen Bereich (26), der sich in Richtung des Werkzeugendes (22) erstreckt und sich bezüglich der Symmetrieachse (19) in Richtung des Werkzeugendes (22) radial erweitert,
- einen, insbesondere an den konischen Bereich (26) angrenzenden, umlaufenden Bund (27) mit einem Bunddurchmesser (28), sowie
- einen sich vom Bund (27) in Richtung des Werkzeugendes (22) erstreckenden Schaftbereich (29) mit einem zweiten Durchmesser (30), welcher größer als der erste Durchmesser (25), jedoch kleiner als der Bunddurchmesser (28) ist, umfasst,
**dadurch gekennzeichnet, dass** der Bund (27) mit dem Walzwerkzeug (31) durch einen durch Umformung hervorgerufenen Materialfluss entfernt wird.

6. Verfahren nach Anspruch 5, **dadurch gekennzeichnet, dass** ein Volumen des Bunds (27) beim Umformen sowohl durch radialen als auch axialen Materialfluss bezüglich der Symmetrieachse (19) durch das Walzwerkzeug (31) verdrängt wird.

7. Verfahren nach Anspruch 5 oder 6, **dadurch gekennzeichnet, dass** der durch das Umformen hervorgerufene Materialfluss zu einer Längenänderung des Konusbolzenrohlings (18) führt.

8. Verfahren nach einem der Ansprüche 5 bis 7, **dadurch gekennzeichnet, dass** der durch das Umformen hervorgerufene Materialfluss zu einer Verkürzung des Halsbereichs (24) führt.

9. Verfahren nach einem der Ansprüche 5 bis 8, **dadurch gekennzeichnet, dass** der Bund (27) beim Umformen im Wesentlichen durch Materialfluss in Richtung des Einbringendes (21) entfernt wird, wobei der Bund (27) in Richtung des Einbringendes (21) verdrängt wird, wodurch sich ein Übergangsbereich (11) zwischen dem Halsbereich (24) und dem Schaftbereich (29) J ausbildet, welcher auf einer dem Werkzeugende (22) zugewandten Stirnseite (12) eine Materialaufwerfung (14) bildet.

10. Verfahren nach einem der Ansprüche 5 bis 9, **dadurch gekennzeichnet, dass** der Konusbolzenrohling (18) durch axiales Stauchen aus einem im Wesentlichen zylindrischen Ausgangsteil geformt ist.

## Claims

1. Cone bolt (1) of a bolt anchor for anchoring in a fixing substrate, wherein the cone bolt comprises
- a main body (3) that extends along an axis of symmetry (2) and is substantially rotationally symmetrical with respect to the axis of symmetry (2), which main body has an introduction end (4), a tool end (5) opposite the introduction end (4),
- a cone (6) at the introduction end (4),
- a neck region (7) having a first diameter (8), which neck region extends from the cone (6) in the direction of the tool end (5),
- a shank region (9) having a second diameter (10) which is larger than the first diameter (8), which shank region extends from the neck region (7) to the tool end (5), and
- a transition region (11) between the neck region (7) and the shank region (9),
**characterised in that** the transition region (11), on an end face (12) that faces in the direction of the introduction end (4), has a depression (13), especially a V-shaped depression, which is rotationally symmetrical with respect to the axis of symmetry (2) and runs approximately circularly around the circumference, which depression is recessed in the direction of the tool end (5).

2. Cone bolt (1) according to claim 1, **characterised in that** the transition region (11) has on the end face (12) a raised area of material (14) which is rotationally symmetrical with respect to the axis of symmetry (2) and runs approximately circularly around the circumference, which raised area of material is elevated in the direction of the introduction end (4) and is arranged at a greater radial distance from the axis of symmetry (2) than the depression (13).

3. Cone bolt (1) according to claim 2, **characterised in that** a height (15), measured parallel to the axis of symmetry (2), between a highest point of the raised area of material (14) and a deepest point of the depression (13), lies in a range between [0.1 - 2] mm.

4. Cone bolt (1) according to any one of claims 1 to 3, **characterised in that** the shank region (9) has, in the vicinity of the transition region (11), a convex region (16) and/or a tapered region (17).

5. Method of producing a cone bolt (1), especially according to any one of claims 1 to 4, from a cone bolt blank (18) by means of a rolling tool (31), wherein the cone bolt blank (18) comprises
- a main body (20) that extends along an axis of symmetry (19) and is substantially rotationally symmetrical with respect to the axis of symmetry (19), which main body has an introduction end (21), a tool end (22) opposite the introduction end (21),
- especially a cone (23) arranged at the introduction end (21),
- a neck region (24) having a first diameter (25), which neck region extends in the direction of the tool end (22) and especially adjoins the cone (23),
- especially a conical region (26) that adjoins the neck region (24), which conical region extends in the direction of the tool end (22) and widens radially with respect to the axis of symmetry (19) in the direction of the tool end (22),
- a circumferential collar (27) having a collar diameter (28), which collar especially adjoins the conical region (26), and
- a shank region (29) having a second diameter (30) which is larger than the first diameter (25) but smaller than the collar diameter (28), which shank region extends from the collar (27) in the direction of the tool end (22),
**characterised in that** the collar (27) is removed with the rolling tool (31) by a flow of material brought about by reshaping.

6. Method according to claim 5, **characterised in that,** during the reshaping, a volume of the collar (27) is displaced by the rolling tool (31) both by radial flow of material and by axial flow of material with respect to the axis of symmetry (19).

7. Method according to claim 5 or 6, **characterised in that** the flow of material brought about by the reshaping results in a change in the length of the cone bolt blank (18).

8. Method according to any one of claims 5 to 7, **characterised in that** the flow of material brought about by the reshaping results in a shortening of the neck region (24).

9. Method according to any one of claims 5 to 8, **characterised in that** during the reshaping the collar (27) is substantially removed by flow of material in the direction of the introduction end (21), the collar (27) being displaced in the direction of the introduction end (21), with the result that a transition region (11) is formed between the neck region (24) and the shank region (29), which transition region forms a raised area of material (14) on an end face (12) that faces towards the tool end (22).

10. Method according to any one of claims 5 to 9, **characterised in that** the cone bolt blank (18) is formed from a substantially cylindrical starting component by axial compression.

## Revendications

1. Cheville tronconique (1) d'un boulon d'ancrage dévolu à l'ancrage dans une base de fixation, ladite cheville tronconique incluant
- un corps de base (3) qui s'étend le long d'un axe de symétrie (2), est pour l'essentiel symétrique en rotation par rapport audit axe de symétrie (2), et comprend une extrémité d'insertion (4) et une extrémité (5) d'engagement d'outil, tournée à l'opposé de ladite extrémité d'insertion (4),
- un cône (6) situé à l'extrémité d'insertion (4),
- une région resserrée (7) qui s'étend à partir dudit cône (6) en direction de ladite extrémité (5) d'engagement d'outil, et présente un premier diamètre (8),
- une région (9) formant fût qui s'étend vers ladite extrémité (5) d'engagement d'outil, à partir de ladite région resserrée (7), et présente un second diamètre (10) supérieur audit premier diamètre (8),
- ainsi qu'une zone de transition (11) entre ladite région resserrée (7) et ladite région (9) formant fût,
**caractérisée par le fait que** la zone de transition (11) comporte, au niveau d'une face extrême (12) pointant en direction de l'extrémité d'insertion (4), un renfoncement (13) notamment configuré en V, évidé en direction de l'extrémité (5) d'engagement d'outil et offrant, par rapport à l'axe de symétrie (2), une symétrie de rotation et un tracé périphérique approximativement circulaire.

2. Cheville tronconique (1) selon la revendication 1, **caractérisée par le fait que** la zone de transition (11) comporte, au niveau de la face extrême (12), une excroissance de matière (14) protubérante en direction de l'extrémité d'insertion (4), offrant une symétrie de rotation et un tracé périphérique approximativement circulaire par rapport à l'axe de symétrie (2) et située, par rapport audit axe de symétrie (2), à une plus grande distance radiale que le renfoncement (13).

3. Cheville tronconique (1) selon la revendication 2, **caractérisée par le fait qu'**une hauteur (15) mesurée parallèlement à l'axe de symétrie (2), entre un point le plus haut de l'excroissance de matière (14) et un point le plus bas du renfoncement (13), se situe dans une plage comprise entre 0,1 et 2 mm.

4. Cheville tronconique (1) selon l'une des revendications 1 à 3, **caractérisée par le fait que** la région (9) formant fût est pourvue, à proximité de la zone de transition (11), d'une région bombée (16) et/ou d'une région (17) s'amenuisant.

5. Procédé de fabrication à partir d'une ébauche (18) de cheville tronconique, au moyen d'un outil de laminage (31), d'une cheville tronconique (1) notamment conforme à l'une des revendications 1 à 4, ladite ébauche (18) de cheville tronconique incluant
- un corps de base (20) qui s'étend le long d'un axe de symétrie (19), est pour l'essentiel symétrique en rotation par rapport audit axe de symétrie (19), et comprend une extrémité d'insertion (21) et une extrémité (22) d'engagement d'outil, tournée à l'opposé de ladite extrémité d'insertion (21),
- en particulier, un cône (23) situé à l'extrémité d'insertion (21),
- une région resserrée (24) notamment limitrophe dudit cône (23), qui s'étend en direction de ladite extrémité (22) d'engagement d'outil et présente un premier diamètre (25),
- en particulier une région tronconique (26) limitrophe de ladite région resserrée (24), qui s'étend en direction de l'extrémité (22) d'engagement d'outil et s'évase dans le sens radial par rapport à l'axe de symétrie (19), en direction de ladite extrémité (22) d'engagement d'outil,
- un collet circonférentiel (27), notamment limitrophe de ladite région tronconique (26) et muni d'un diamètre (28),
- ainsi qu'une région (29) formant fût qui s'étend en direction de ladite extrémité (22) d'engagement d'outil, à partir dudit collet (27), et présente un second diamètre (30) supérieur au premier diamètre (25), mais toutefois inférieur au diamètre (28) dudit collet,
**caractérisé par le fait que** le collet (27) est éliminé, à l'aide de l'outil de laminage (31), par un flux de matière résultant du formage.

6. Procédé selon la revendication 5, **caractérisé par le fait qu'**un volume du collet (27) est refoulé à l'aide de l'outil de laminage (31), au cours du formage, par un flux de matière à la fois radial et axial par rapport à l'axe de symétrie (19).

7. Procédé selon la revendication 5 ou 6, **caractérisé par le fait que** le flux de matière, résultant du formage, gouverne une variation de longueur de l'ébauche (18) de cheville tronconique.

8. Procédé selon l'une des revendications 5 à 7, **caractérisé par le fait que** le flux de matière, résultant du formage, gouverne un raccourcissement de la région resserrée (24).

9. Procédé selon l'une des revendications 5 à 8, **caractérisé par le fait que** le collet (27) est éliminé, au cours du formage, pour l'essentiel par un flux de matière en direction de l'extrémité d'insertion (21), ledit collet (27) étant alors refoulé en direction de ladite extrémité d'insertion (21), donnant ainsi naissance, entre la région resserrée (24) et la région (29) formant fût, à une zone de transition (11) formant une excroissance de matière (14) au niveau d'une face extrême (12) pointant en direction de l'extrémité (22) d'engagement d'outil.

10. Procédé selon l'une des revendications 5 à 9, **caractérisé par le fait que** l'ébauche (18) de cheville tronconique est formée par refoulement axial à partir d'une pièce initiale substantiellement cylindrique.
